# EUROPEAN PATENT SPECIFICATION

(11) **EP 4 062 365 B1**
(45) Date of publication and mention of the grant of the patent: **11.02.2026**
(21) Application number: 21830948.2
(22) Date of filing: 01.12.2021
(51) Int. Cl.: F03D 17/00

(54) **UNMANNED AIRBORNE VISUAL DIAGNOSIS OF AN OPERATING WIND TURBINE GENERATOR**
VISUELLE DIAGNOSE EINES WINDTURBINENGENERATORS IM BETRIEB MIT EINEM UNPILOTENLUFTFAHRZEUG
DIAGNOSTIC VISUEL D'UN GÉNÉRATEUR D'ÉOLIENNE EN FONCTIONNEMENT DEPUIS UN VÉHICULE AÉRIEN SANS PILOTE

(30) Priority: 03.12.2020 EP 20211667
(43) Date of publication of application: 28.09.2022
(73) Proprietor: Ventus Engineering GmbH, 1110 Vienna (AT)
(72) Inventor: GALETSAS, Chrysanthos, 1100 Vienna (AT); LÜBKER, Poul Anker Skaarup, 6340 Baar (CH); MINGALIEV, Shavkat, 1010 Wien (AT); TOLRON, Xavier, 1150 Wien (AT); SVENSSON, Michael, 7000 Fredericia (DK)
(74) Representative: Bak, Poul Erik
(86) International application number: PCT/EP2021/083706
(87) International publication number: WO 2022/117616

(56) References cited:
- EP-A1- 3 430 255
- EP-B1- 3 430 255
- GB-A- 2 580 639
- US-A1- 2016 292 869
- US-A1- 2020 018 291

## Description

### Field of the Invention

The present invention relates to a method of visually diagnosing a moving part of an operating wind turbine generator (WTG). The method comprises acts as will be outlined in the following and includes an act of positioning an unmanned airborne vehicle (UAV) carrying a visual inspection system in a position in the vicinity of the wind turbine generator (WTG) and pointing the visual inspection system with a field of view about a line of sight towards the wind turbine generator (WTG).

### Background of the Invention

Diagnosing the conditions and the operational condition of a wind turbine generator is an ongoing endeavour to optimize performance and durability.

Standard practise is to close-down operation of a wind turbine generator for inspection.

Such closing down may require operational planning, operational personnel as well as personnel to perform the diagnosis.

Hereto inspection has been performed either during stand-still or by placing inspection equipment on ground. Correct alignment has hereto been of paramount importance.

In example WO 2017/158479 discloses monitoring a wind turbine generator by visual inspection.

Although drones have been used to video and photograph wind turbines, no diagnosing of aspects of a wind turbine generator in operation has been possible.

US2020/0018291A1 discloses an inspection device in the form of an unmanned airborne vehicle performing inspection of a wind turbine generator. Control information for the inspection device can be, in particular, flight paths, target coordinates, flight times, alignment information, operating information for sensors, distance information or the like. Control information for the wind turbine can in particular be its azimuth angle, hub angle or pitch angle.

### Object of the Invention

It is an object to enable or improve diagnosis of an operating wind turbine generator.

It is an object to enable or improve diagnosis or inspection of dynamic aspects of an operating wind turbine generator.

It is an object to ease diagnostics and to reduce resources necessary to perform diagnosis.

It is an object to provide diagnosis of specific metrics such as pitch angle measurements during operation.

### Description of the Invention

An objective is achieved by method of visually diagnosing a moving part of an operating wind turbine generator (WTG). The method comprises acts as will be outlined in the following.

There is an act of positioning an unmanned airborne vehicle (UAV) carrying a visual inspection system in a position in the vicinity of the wind turbine generator (WTG).

There is an act of pointing the visual inspection system with a field of view about a line of sight towards the wind turbine generator (WTG).

There is an act of stabilizing the unmanned airborne vehicle (UAV) at the position.

There is an act of triggering a capture of images. The act of triggering may be a simple start of a video or a series of images. The act of triggering may also be based on an event, measurement, or of a feature in an image. Triggering may also be performed in real time or post-processing. When done during post-processing, then triggering may also be an act of selecting suitable images.

There is an act of capturing of multiple images of the field of view using the visual inspection system.

There is an act of diagnosing structural aspects of the wind turbine generator (WTG) as a function of the captured images.

The act of triggering is performed by using live image analysis for brightness change detection as will be disclosed.

Thereby improved or correct adjustment and monitoring the conditions of wind turbine - including wind turbine blades - is achieved, which ensures optimal operation and provides diligent information into the decision making of servicing, maintenance and a potential repair.

As will be outlined, there are multiple specific areas of diagnosis or assessments that needs to be verified in order to ensure high performance of e.g. the blades.

In an aspect, diagnosing may be of relative blade pitch misalignment of the blades. In an aspect, diagnosing may be of the outside condition of the blades.

Images or pictures may be captured and contain regions of interest or points of interest of the wind turbine or blades. The capturing will be by an unmanned airborne vehicle (UAV) with an inspection system. That is, a drone-mounted camera, or a camera mounted on another airborne vehicle.

An important advantage is that the wind turbine can stay in operation during the whole time while capturing the necessary images. The fact that the turbine has no downtime related to the inspection is a huge advantage in terms of reducing production loss and related costs to perform these inspections.

The importance of these inspections also lies in the fact that they can be performed indifferently onshore and offshore. Hence the same procedures, systems and methodologies can be used on- as well as offshore.

It is appreciated that the diagnosing may comprise image analysis. Such image analysis may be performed post-capturing, semi-automated, automated and or performed on the unmanned airborne vehicle or separate hereto.

There may be an act of filtering the data of interest, e.g. identical blade passage for all blades, blade must be in the line of sight, etc.

The image analysis may be of the labelled pictures of interest for anomaly detections on the blades. This can be done with Machine Learning techniques, Deep Learning, Pattern recognition, edge detection, image subtraction.

The unmanned airborne vehicle (UAV) may be a drone or another airborne vehicle.

The visual inspection system may be a high-speed camera of any kind either video or still photos.

A person skilled in the art will appreciate that the visual inspection system may be a camera setup, including a camera with a lens for image capturing, an image acquisition software with a triggering system, an image analysis software and a computational unit that will be running the image acquisition and image analysis software. A person skilled in the art will appreciate to choose a high-speed camera, high resolution camera, a camera allowing as low exposure time as possible.

The triggering may be performed by using a change in light, LiDAR distance measurements or any kind of change in the photo that can be used as trigger. The Trigger system can be internal or external to the camera.

Triggering may be performed by using live image analysis for brightness change detection, i.e. indicative of a passage of blades. Alternatively, or in addition a LiDAR measurement is used to calculate the distance from the nacelle, changing with each blade passage. These triggering options may be performed in an automated or semi-automated way.

A manual triggering can be performed by the field engineer or operator of the vehicle. That is that a manual triggering option may available and used by an image acquisition software operator.

The capturing of images may be by using a video or photo camera but can also be by a use of a LiDAR scanner. The spectral range may be IR, visual or any other suitable or disable spectrum.

The analysis or diagnosing structural aspects may be performed by using computational means with any kind of pattern recognition, artificial intelligence and (deep) machine learning algorithm or artificial neural network.

An objective is achieved by a method of visually inspecting a wind turbine generator (WTG) and parts thereof during operation. The method comprises acts as will be disclosed in the following.

The method in particular relates to wind turbine generators in operation, e.g. while the rotor is rotating. This is referred to as dynamic inspection.

There is an act of pointing a visual inspection system with a field of view about a line of sight in a plane of rotor blade of the wind turbine generator (WTG). The blade axis may be aligned with the line of sight at some point during the turning of the rotor during operation of the wind turbine generator.

The capturing of images of the field of view may be of multiple images with at least part of the rotor blade in the image. The positioning or pointing may be adjusted in order to capture suitable images.

There may be an act of selecting at least one reference image amongst the captured images. The act of selecting may also be from reference images made available from other wind turbine generators, from a design or from a historic library of images, say from completion of assembly, from a previous inspection or calibration of the wind turbine generator.

Selecting may be of one or more images and thus, disregarding others. The selection may be by processing images, classifying images or filtering images as will be disclosed. Selecting may also be by an operator of the system via an interface.

There may be an act of comparing the at least one other captured image with the at least one reference image. The act of comparing will be disclosed, but generally a comparison between one or more reference images and at least one captured image is performed. The comparison may be based on identifying features such as edges, intensities, colours, markers, or the like.

There is an act of inspecting aspects, or structural aspects, of the wind turbine generator (WTG) as a function of the result of the act of comparing.

Thus, diagnosing or inspection may be with respect to certain quantities such as structural quantities of the wind turbine generator. Those may be blade pitch angle, the angle the blade is mounted with on the hub, blade bending, blade twisting, blade profile, misalignments, e.g. shifts, or general surface properties including damages, dents, and alike.

This allows for systematic collection of images, organisation of images and processing of images to perform improved diagnostics or inspection of wind turbine generator parts including blades and differences of blades.

Hence, the visual inspection allows the capture of optimised or maximum energy from the wind and to minimize loads on the wind turbine rotor and on other main components in wind turbines and in consequence hereof extend or reach the maximum life time of the wind turbine generator. The visual inspection enables the rotor to be adjusted or balanced.

Inspection may be more accurate and faster than manually capturing images and analysing the images and extracting information about the wind turbine generator.

In an aspect, the act of positioning is performed as a function of a region of interest (ROI) on the wind turbine generator (WTG) identified in a captured image.

The region of interest (ROI) may be an area or a point of interest (POI). A distinctive feature of the wind turbine structure such as an edge or shape of e.g. a stationary part of the of the wind turbine e.g. the tower, the nacelle (being stationary relative to e.g. the rotor).

An operator of the unmanned airborne vehicle and of a camera may use such region of interest in the act of positioning. There may be an on-target functionality that is used to position the unmanned airborne vehicle. The process may be semi-automated in the sense that an operator generally positions the unmanned airborne vehicle in the desired position or close thereto and then an automated positioning is performed based on a captured image.

In a special case there may be a known feature including a damage or abnormal feature on the wind turbine structure and the unmanned vehicle is positioned to have that feature in the field of view or as a reference point.

The positioning may further use coordinates e.g. GPS or local coordinates in combination with a captured or recorded image or even LiDAR distances.

In an aspect, the act of stabilizing is performed as a function of a region of interest (ROI) on the wind turbine generator (WTG) identified in a captured image.

The unmanned airborne vehicle may be stabilized with respect to orientation or drift based on the outlined regions of interest analysis in respect of positioning. The unmanned airborne vehicle may use the orientation of regions of interest, features on the wind turbine generator to adjust orientation and position to stabilize the vehicle to maintain a specific field of view.

The advantage is that a series of images can be recorded under different operational conditions, say rotational speed, pitch angle, etc., which will improve the processing and ultimately the diagnosis.

In an aspect, the aforementioned acts are performed by positioning the unmanned airborne vehicle (UAV) along a flight path relative to the wind turbine generator (WTG).

The flight path may be predetermined based on the location of the wind turbine generator, the size and geometry. The flight path may be fixed based on e.g. global positioning signals or local positioning signals.

The flight path may also be relative e.g. the operational condition of the wind turbine generator. The turbine may be yawing and positioning may be adjusted according to the yaw-angle. The fight path or positioning may also be determined based on e.g. a distance to e.g. the tower, the nacelle, rotor plane, etc.

The act of triggering is performed as a function of the moving part as a distance between the unmanned airborne vehicle (UAV) and the moving part.

In an aspect, the act of capturing is performed after an act of triggering.

The act of triggering may be according to a trigger which setting is performed using a graphical user interface (GUI) configured to present at least one captured image and with at least one means for an operator to adjust a parameter.

The parameter may be a feature of the image. It may be a pixel value, a location of an edge or alike. In an aspect an operator may have defined a region of interest (ROI) or a point of interest (POI).

Triggering may be auto-triggering, where an algorithm of the camera or additional external equipment connected to the camera provides a trigger when the brightness conditions on the specified ROI change. A computer may be controlling the camera.

Therefore, when the blade tip is passing through the ROI, the brightness conditions change and a trigger is initiated. Triggering may be software triggering or semi-automated. This may be a triggering option where a mean value of the brightness in the ROI is calculated. When the blade is passing through the ROI, there is a peak indicating the change of this mean brightness value. When this signal is captured, the camera is triggered (See example).

The advantage of this the software triggering option is that an operator can check/ change this signal and, by using various options, try to capture it in the most efficient way.

A further advantage of using the outlined trigger is that wind turbine generators operate with variable or semi-variable speed continuously adjusting to the wind condition like gusts etc., and therefore, a trigger as known hereto is very difficult / if not impossible to calculate based on historical data collected from the rotor operation.

Triggering may be manual triggering which option is used in a situation where the other two options are not working optimally. For example, changes in brightness conditions, high wind speed with bending variations, shiny blade surface, etc. may require manual triggering.

By way of example, images may be captured by a high-speed camera, which at the present time has a maximum frame rate of 543 frames per second (fps). With that frame rate, a total number of 5900 images can be recorded. Therefore, with 100 images/trigger (default value), a total amount of 59 blade passings, or 19 full rotor rotations, can be recorded. A person skilled in the art will find it natural to apply the available cameras and their ever-increasing capacity and ever decreasing price to balance the needs of an inspection.

This exemplary number of recorded rotations is targeted in order to assure that there will be enough data for the accurate calculation of, in this case, an inspection of a relative blade pitch misalignment between the wind turbine blades.

In example, what influences the accuracy of an inspection, such as a relative blade pitch misalignment, is that appropriate triggering and/or sorting results in improved or new inspections. In example, it may be possible to inspect WTG blade pitch change during the measurement. With a high number of recorded rotations, better or more measures of pitch angle change can be detected by comparing the results of each rotation with the consecutive ones and filtering out rotations where the overall pitch angle is different.

The advantage of this triggering option is that one can check/change this signal and, by using various options, try to capture it in the most efficient way.

In an aspect, the act of triggering is initiated as a function of the region of interest (ROI) as when a brightness value of the region of interest (ROI).

In an aspect, there is a further act of establishing relative position or distance between the unmanned airborne vehicle (UAV) and the wind turbine generator (WTG).

The relative position may be determined based on the geometry of the wind turbine generator and the position data (e.g. GPS-coordinates) of the wind turbine generator combined with position data (e.g. GPS-coordinates) of the unmanned airborne vehicle.

As such relative coordinates between the two objects may be established and used.

A distance between the wind turbine generator and unmanned airborne vehicle may also be used. The vehicle may have a LiDAR installed targeting the wind turbine generator and yielding the distance.

Such local or relative positioning or distance may improve the general positioning and stabilization and thereby ensure or improve proper capturing of images for analysis. A local or relative positioning or distance may be the same for a particular wind turbine generator type and as such an inspection type may be defined and performed accordingly thereby ensuring comparative diagnosis of wind turbine generators of the same type.

In an aspect, the before mentioned acts may be performed as follows.

The act of positioning and/or stabilizing is performed as a function of the relative position or distance so that the relative position or distance is substantially stable.

The act of triggering is performed as a function of the relative position or distance when the relative position or distance is changing.

Hence a signal e.g. a LiDAR signal may be used to both ensuring or improving positioning and/or stabilization and at the same time be used as a trigger.

In example: An unmanned airborne vehicle has as LiDAR pointing towards a stationary part (including the symmetrical hub) e.g. the tower whilst having a moving or rotating part crossing or entering the line of sight or field of view. Then part of the time the LiDAR measured distance to the tower may be used to positioning and/or stabilizing the vehicle. When the moving part e.g. a rotating blade passes the LiDAR view, then a changing distance may suitably trigger the capturing of images for diagnostics.

In another example, the unmanned airborne vehicle is placed basically in the rotor plane with the LiDAR towards the hub. When a blade rotates and the rod of the blade enters the LiDAR view, then a suitable change in the LiDAR signal can be used to trigger an intended capturing of the tip of the blade. This allows for e.g. pitch analysis including relative and dynamic pitch angle analysis.

In an aspect, the captured images are time stamped with a clock and may be synchronized with a wind turbine operational clock. Time stamps may be applied with a temporal resolution according to the task and the availability of data storage and bandwidth. Time stamps in the order of milliseconds (ms) may be an appropriate resolution but depending on the analysis and the operational conditions it may be longer (e.g. seconds, minutes) or shorter.

The wind turbine generator may have a clock and the unmanned airborne vehicle i.e. the systems onboard the vehicle may have a clock. The clocks may be synchronized, or the data may be time stamped in post processing. There may also be a single clock providing time stamps to both the wind turbine generator and the vehicle.

The analysis may thus be of timestamped images. Such timestamping may be performed real-time or there may be a subsequent alignment or synchronization of the recorded images with e.g. operational time stamped data of the wind turbine generator under diagnosis. In the case were a video is captured, there will be a need to transform the videos into timestamped images.

There may be an act to label the blades in order to define which blade is passing in the line of sight. Such labelling may be done using the timestamps (as precise as possible) of each picture.

Diagnosing or analysis of the images may then be performed to determine cracks, defaults, missing parts, or anything unusual to the normal operation of the turbine.

An act may be to determine the rotation per minute (RPM) that turbine is experiencing while the data is being captured. This can easily be calculated with the timestamps difference of two consecutive similar blade passage images.

On the basis of the first rotation of initial data, labelling all subsequent following pictures with a blade name to be determined by their time of acquisition.

There may be a specific type of diagnostic relating to the diagnosing pitch angle, dynamic relative pitch angle and other metric measurements performed basically along the cord of a blade.

In an aspect, dynamic relative pitch angles and other pitch metric measurements may be performed by one or more repetitive acts as outlined in the following.

There may be an act of positioning the unmanned airborne vehicle substantially in the rotational plane of the wind turbine generator (WTG).

There may be an act of pointing the line of sight substantially towards the hub or the nacelle.

There may be an act of triggering capturing as function of the moving part of the wind turbine generator.

In an aspect, the captured images may be analysed. The acts of diagnosing may thus further comprise the following acts:
There is an act of selecting at least one reference image amongst the captured images or from elsewhere.

There is an act of comparing the at least one other captured image with the at least one reference image.

There is an act of diagnosing structural aspects of the wind turbine generator (WTG) as a function of the result of the act of comparing.

The act of comparing may comprise an act of determining a deviation amongst blades. This act may contain the act of diagnosing, which involves applying a set of blade metrics to the reference image.

The act of comparing is performed by blade metrics applied to the reference image compared to the blade metrics of at least one captured image.

This exemplary number of recorded rotations is targeted in order to assure that there will be enough data for the accurate calculation of, in this case, an inspection of a rel - ative blade pitch misalignment between the wind turbine blades.

In example, what influence the accuracy of an inspection such as a relative blade pitch misalignment is that appropriate triggering and/or sorting results in improved or new inspections. In example, it may be possible to inspect WTG blade pitch change during the measurement. With a high number of recorded rotations, better or more measures of pitch angle change can be detected by comparing the results of each rotation with the consecutive ones and filtering out rotations where the overall pitch angle is different.

In example, this filtering out rotations, where the relative blade pitch angles differ to the other rotations, which, in example could be due to the fact that the wind turbine generator blade pitch system has been activated during this specific rotation.

In example, blade pitch requires one metric to determine basically an angle. Blade bending requires a different metric. Other structural changes e.g. twisting and/or shifts may require yet another metric.

In example of analysis of the dynamic inspection of say, relative blade pitch misalignment, it should be noted that the relative blade pitch misalignment is calculated at the same rotation for several consecutive rotations. Then, the results of each rotation are compared to the other consecutive rotations. The ones where the pitch angle is different, or significantly different, are filtered out. This is achieved by sorting. The final results are based on the ones that have been calculated repeatedly on a number of consecutive rotations. This filtering or sorting is done in order to avoid miscalculation of the relative blade pitch misalignment from a possible blade pitch change, e.g. from a possible blade pitch change due to the blade pitch system actually changing the pitching of the blades. Using this filtering or sorting also means that pitching information from the WTG is not needed during the inspection.

The dynamic relative blade pitch misalignment measurements using the unmanned airborne vehicle or drone for offshore but also onshore applications will be using the same principles, and methodology regarding positioning, image acquisition and image analysis as outlined.

The main trigger for considering the drone as the tool for carrying our equipment, in order to perform dynamic relative blade pitch misalignment measurements.

One challenge for offshore dynamic relative blade pitch misalignment measurements is to ensure the stability of the camera setup. When using the boat/vessel surface for placing the measurement equipment, then several levels of stabilization (one or more adaptive platforms, boat/vessel anchoring, etc.) may be needed. In order to ensure that the image capture and consequentially the measurement outcome will be the desired one.

All these challenges related to keeping the camera in a stable position during inspection can be also solved with the use of the drone as the vehicle for carrying the camera setup, as long as we ensure that the flying stability of the drone will be sufficient for having the desired image acquisition outcome.

Therefore, the test performed for checking the above, was regarding the drone stability. At present several drones have been tested (a starting point could be drones trading as DJI M200, M600, M300) for proof of concept, and the outcome of these tests was that there is a drone (M300) could provide the required stability for a given configuration. Improvements in drones and reduction in size and weight of equipment will naturally improve and inspection may be improved.

Thus, even complex diagnostics or inspections e.g. of performing dynamic relative blade pitch misalignment measurements with the use of a drone is feasible. Video tests have shown that the deciding factor for judging the stability of the drone and the overall measurement is satisfied. In example the Regions Of Interest (ROIs) on the nacelle and the blade (e.g. pressure and suction side, and leading and trailing edges) remain in the image perspective during the whole duration of the measurement.

Based on these tests has shown that it is feasible to use the drone for carrying the equipment needed for performing the dynamic relative blade pitch misalignment measurements. The above principles and methodology for positioning, image acquisition and image analysis will remain the same with some small applied changes/updates, based on the development progress.

A person skilled in the art will appreciate necessary adjustments and implementations of off-the-shelf components in communication between the camera and the computational unit and. Furthermore, a person skilled in the art will naturally aim to reduce the total weight of all the equipment that will be required to be placed on the drone, based on the drone's payload limits.

In an aspect, the acts are performed repetitively as required with one or more repetitive acts as outlined in the following:
There is an act of positioning the unmanned airborne vehicle substantially in the rotational plane of the wind turbine generator.

There is an act of pointing the line of sight substantially towards the hub or the nacelle.

There is an act of triggering capturing in an azimuth angle of rotation.

There is an act of repetitive positioning along an inspection path substantially vertically whilst triggering capturing as function of a blade substantially in the same azimuth angle of rotation.

Thus, the unmanned airborne vehicle or drone may perform a flight or survey performing a leading edge and trailing edge inspection.

In example, the drone will position itself at hub height say from a predefined distance from the tower and possibly depending on the length for the turbine blades. This predefined distance will be kept throughout the full process of acquiring or capturing the images / videos. The predefined distance from the tower could be measured by either a built-in drone instrument or an external device, such as a LiDAR. The drone will make by analysis or the control of an operator be in the axis of the blade as much as possible.

Now that the distance is measured and fixed, the zooming and the focus, e.g. of a high speed camera, are adjusted either manually or automatically in order to get the best quality of images in the sense of capturing regions of interest in the field of view, score on the image quality. The region of interest used in a calibration step may include the hub as an example.

The capturing of images / videos may start with say at least 1 rotation at the initial fixed position. This may later be used in the image analysis so as to label the blade as they pass in the line of sight.

The drone will then either go up or down in altitude, or both whilst the regions of interest are kept in the line of sight. In an aspect, with the same azimuth angle and/or the same distance from the turbine is maintained in order to continue acquiring or capturing images of the same quality, but of different location on the blades. The scan may stop the capture when the tip is reached.

In example, all three blades may be captured indifferently, but this distinction can be handled as a post-processing of all images.

In an aspect, the acts are performed repetitively, where one or more of the following repetitive acts are required:
The act of positioning the unmanned airborne vehicle off the rotor plane.

The act of pointing the line of sight substantially in a plane perpendicular to the rotational plane of the repetitive positioning along an inspection path substantially along a radial of the rotor plane of the wind turbine generator.

There is an act of positioning the unmanned airborne vehicle substantially at a hub height of the wind turbine generator (WTG). From there a blade condition inspection may be started.

The image capture for blade condition inspection can be performed in one of several ways. Either continuous videos of the whole inspection or images triggered at a time / place of interest can be used independently in the following explanations.

In an aspect, there may be further acts as described in the following.

There is an act of selecting at least one reference image amongst the captured images or from elsewhere.

There is an act of comparing the at least one other captured image with the at least one reference image.

There is a further act of diagnosing structural aspects of the wind turbine generator (WTG) as a function of the result of the act of comparing.

Thus, the unmanned airborne vehicle or drone may perform a flight or survey performing a pressure side inspection or a suction side inspection.

The drone may position itself at hub height and in a predefined distance from the tower. Say, as close as possible. This distance will be kept throughout the full process of acquiring the images / videos. The distance from the tower could be measured by either a built-in drone instrument or an external device such as a LiDAR. The drone could be in a position upwind for the pressure side acquisition, and downwind for the suction side acquisition. As an example of an upwind position of the drone at hub height, the drone is prepared to capture the pressure side.

There may be acts of zooming at the root of the blade, adjusting focus, and capturing a first rotation.

There are acts of iteration of capturing the images until the tip of the blade is reached. There may be a change of the azimuth angle of the drone towards the tip of the blade. That is, there may be a change of azimuth angle of the drone towards the tip of the blade or a translation of the drone, keeping the same azimuth angle, towards the tip of the blades.

Zoom and focus may be adjusted and the is an acquisition of data for one rotation. Images from root to tip are acquired.

The same procedure for the suction side downwind may be applied.

In an aspect, the unmanned airborne vehicle (UAV) performs a take-off or landing on an adaptive platform with a helipad configured to support an unmanned aerial vehicle (UAV).

An objective may be achieved by an unmanned airborne vehicle (UAV) configured with means to perform one or more of the methods or acts outlined.

In an aspect, the method of performing an unmanned aerial vehicle (UAE) visual inspection of an offshore wind turbine may contain the following acts.

There is an act of using a visual inspection system and a vessel with a platform. Landing or taking-off may be on or from platform of a certain size. The platform may be an adaptive platform and configured to stabilize the platform relative to the movements of the vessel. If the vessel or the landing platform on the vessel is not stable enough for the drone to land then an option could a "landing mode" or "auto pilot mode" where the drone connect to at least two sensors located on the drone landing platform and then the drone adapts itself to the movement of the drone landing platform during landing or taking-off.

There is an act of configuring to support an unmanned aerial vehicle (UAV) comprising a camera with a line of sight and a field of view. This act may further contain the following acts:
There is an act of positioning the unmanned aerial vehicle (UAV) relative to the offshore wind turbine with the line of sight towards the wind turbine.

There is an act of capturing at least one image of the field of view in the line of sight using the camera.

There is an act of capturing the blade in the field of view by use of image recognition to determine the outline of the blade.

There is a further act of landing the unmanned aerial vehicle (UAV) on the helipad whilst adjusting the platform or the adaptive platform.

Thus, the outlined actions of diagnosing may be performed of an offshore wind turbine and with the unmanned airborne vehicle or drone being operated from a vessel. The vessel may be equipped with an adaptive platform with a helipad configured to support an unmanned aerial vehicle (UAV).

There may be an act of landing the unmanned aerial vehicle (UAV) on the helipad whilst adjusting the helipad of the adaptive platform. The adjusting may be configured for the act of landing. There may be an act of taking off the unmanned aerial vehicle (UAV) from the helipad whilst adjusting the helipad of the adaptive platform. The adjusting may be configured for the act of taking off.

In an aspect, an unmanned airborne vehicle (UAV) may be configured with means to perform one or more of the methods as described above.

A starting point at present for an unmanned airborne vehicle may be drone with a camera, a payload capacity and stability such as DJI M300. The inspection system may be a camera or a high-speed camera with a trigger.

In example the camera and hardware equipment that will be needed for performing the relative blade pitch misalignment measurements with the drone, may be as follows.

A camera which will be placed on the drone. A power unit for the camera which will connected to the camera on the drone. A lens connected to the camera (either fixed focal length or a zoom) on the drone. The camera can run in fixed focal length (Fixed Focus) or auto focus.

There is a computational unit with image acquisition software and image analysis software either on the drone or on the vessel (in the case of offshore measurements) or on the ground (in the case of onshore application).

Communications between the camera and the computational unit for live feedback during image acquisition is established. This communication may be: wireless or wired if the computational unit is on the vessel (offshore measurements) or the ground (onshore measurements).

### Description of the Drawing

Embodiments of the invention will be described in the figures, whereon:
Fig. 1 illustrates a wind turbine generator being visually inspected from five different field of views;
Fig. 2 illustrates visual inspection of an offshore wind turbine generator;
Fig. 3 illustrates visual inspection of a suction side and/or pressure side of a rotor blade;
Fig. 4 illustrates a principle of visual inspection by capturing images of a rotor blade;
Fig. 5 illustrates a principle of visual inspection by capturing images of a rotor blade;
Fig. 6 illustrates visual inspection of a pitch of a rotor blade;
Fig. 7 illustrates visual inspection of a pitch of a rotor blade and the distance measuring;
Fig. 8 illustrates positioning of a visual inspection system for a view of a pitch of a rotor blade;
Fig. 9 illustrates a captured image from a test;
Fig. 10 illustrates a captured image of a rotor blade along a pitch line of sight;
Fig. 11 illustrates visual inspection of leading edge and/or trailing edge of a rotor blade;
Fig. 12 illustrates visual inspection of a trailing edge or a leading edge of a rotor blade and distance measurement; and
Fig. 13 illustrates a principle of visual inspection by capturing images of a trailing edge or a leading edge of a rotor blade.

**Detailed Description of the Invention**

| **Item** | **Reference** |
|---|---|
| Vessel | 1 |
| Sea | 5 |
| Visual inspection system | 10 |
| Camera | 11 |
| Field of view | 12 |
| Line of sight | 14 |
| Pressure side - line of sight | 15 |
| Suction side - line of sight | 16 |
| Leading edge - line of sight | 17 |
| Trailing edge - line of sight | 18 |
| Pitch - line of sight | 19 |
| Reference image | 20 |
| Captured images | 22 |
| Region of interest | ROI |
| Wind turbine generator | WTG, 30 |
| Rotational plane | 32 |
| Moving part | 34 |
| Wind turbine tower | 46 |
| Nacelle | 48 |
| Hub | 49 |
| Rotor blade | 50 |
| Rotor | 51 |
| Blade metrics | 52 |
| Rotor plane | 53 |
| Pitch angle metrics | 54 |
| Relative pitch misalignment | 58 |
| Rotation direction | 59 |
| Radial | 60 |
| Azimuth | 61 |
| Unmanned airborne vehicle | UAV |
| Position | 80 |
| Relative position | 82 |
| Distance | 84 |
| Flight path | 86 |
| Inspection path | 88 |
| Adaptive platform | 91 |
| Frame | 92 |
| Suction cups | 94 |
| Vibration mounts | 95 |
| Camera support | 96 |
| Helipad | 98 |
| Graphical user interface | GUI |
| Method of visually diagnosing | 1000 |
| Positioning | 2300 |
| Pointing | 100 |
| Stabilizing | 2220 |
| Triggering | 210 |
| Capturing | 200 |
| Selecting | 300 |
| Comparing | 500 |
| Diagnosing | 600 |
| Determining | 610 |
| Establishing | 700 |
| Adjusting | 2200 |
| A method of performing an unmanned aerial vehicle (UAE) visual inspection of an offshore wind turbine | 3000 |
| Positioning the unmanned aerial vehicle (UAV) | 3100 |
| Landing | 3200 |
| Lifting | 3300 |

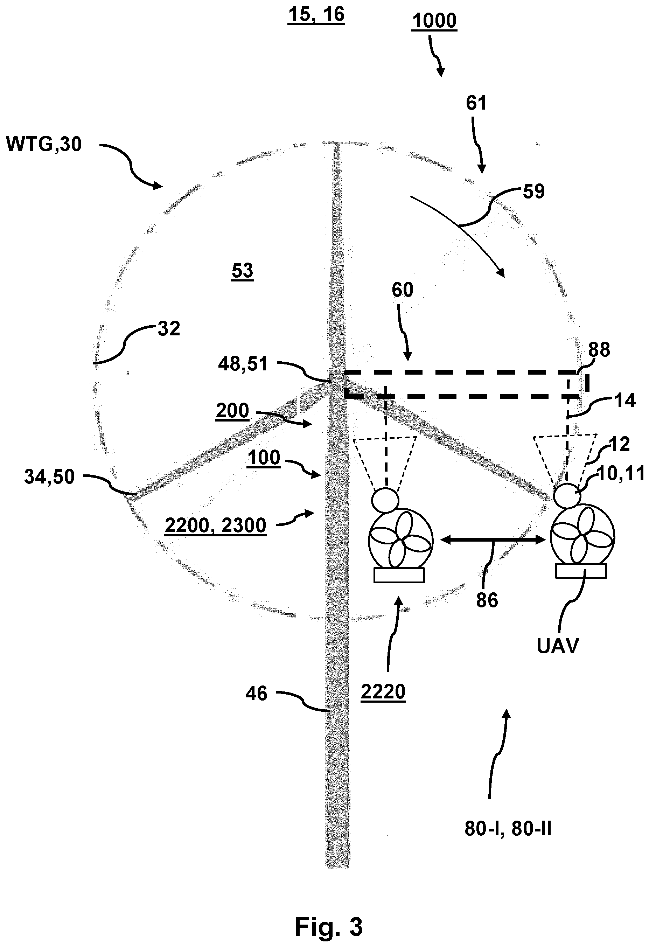

In the following figures numerals referring to acts or steps are shown in different figures as appropriate. In example, figure 3 illustrates a method 3000 of performing an unmanned aerial vehicle (UAE) visual inspection of an offshore wind turbine. Likewise, the method of visually diagnosing 1000 and acts of e.g. triggering 210, comparing 500, etc., are shown as appropriate.

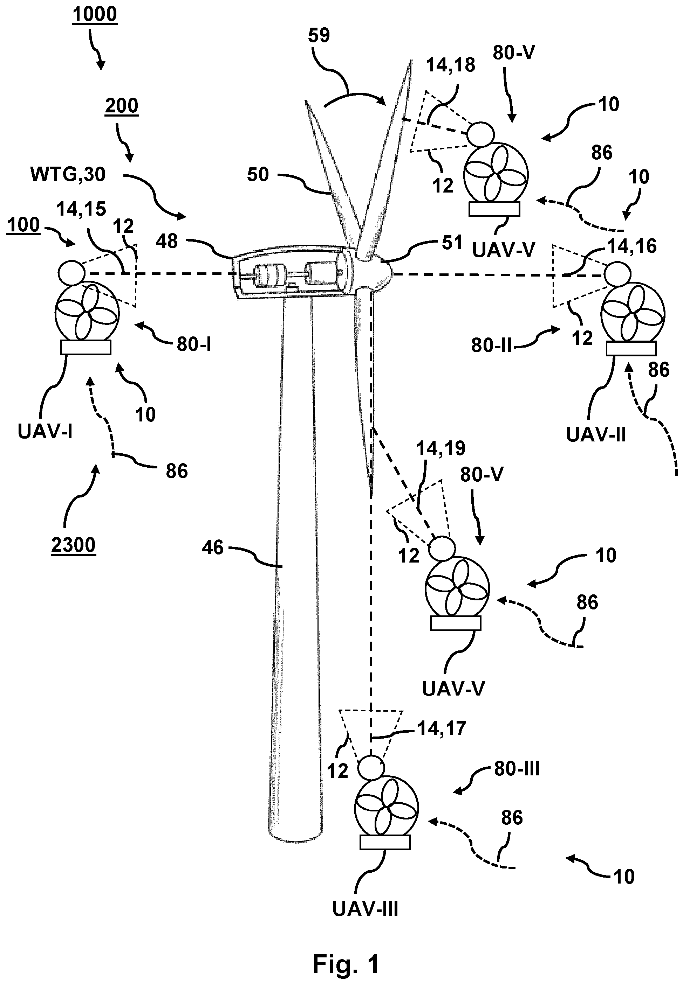

Figure 1 illustrates a wind turbine generator WTG 30 being visually inspected from five different lines of sights 15, 16, 17, 18, 19.

The wind turbine generator WTG 30 comprises a wind turbine tower 46, a nacelle 48, a rotor 51 and three rotor blades 50 rotating in a rotor plane 53 in a rotation direction. Thus, the rotor blades 50 can be moving parts 34 to be diagnosed, according to the invention.

Each rotor blade 50 can be seen from the five different line of sights 15, 16, 17, 18, 19, because the blade 50 has a suction side, a pressure side, a leading edge, a trailing edge and distal end. However, blades 50 have a length making it difficult to get an entire view of the suction side or the pressure side or the leading edge or the trailing edge, while still having a necessary level of detail enabling a proper diagnosing of the blade 50.

Thus, it is proposed to use an unmanned aerial vehicle UAV for capturing images 22 of the individual blades 50. The figure is disclosed with five unmanned aerial vehicles UAV-I, UAV-II, UAV-III, UAV-IV, UAV-V in five different positions 80-I, 80-II, 80-III, 80-IV, 80-V and flight paths 86, however, it could be a single UAV performing acts of positioning between the different positions 80-I, 80-II, 80-III, 80-IV, 80-V.

The UAV-I at position 80-I comprises a visual inspection system, having a line of sight 14, 15 being a suction side 16 - line of sight 15 and a field of view 12 about the line of sight 14, 15.

The UAV-II at position 80-II comprises a visual inspection system having a line of sight 14, 16 being a pressure side 15 - line of sight 16 and a field of view 12 about the line of sight 14, 16.

The method of diagnosing a blade 50 along the suction side and the pressure side is described in greater detail in the figure description of figs. 3-5.

The UAV-III at position 80-III comprises a visual inspection system having a line of sight 14, 17 being along the longitudinal axis of the blade 50, which is defined as pitch - line of sight 17 and a field of view 12 about the line of sight 14, 17.

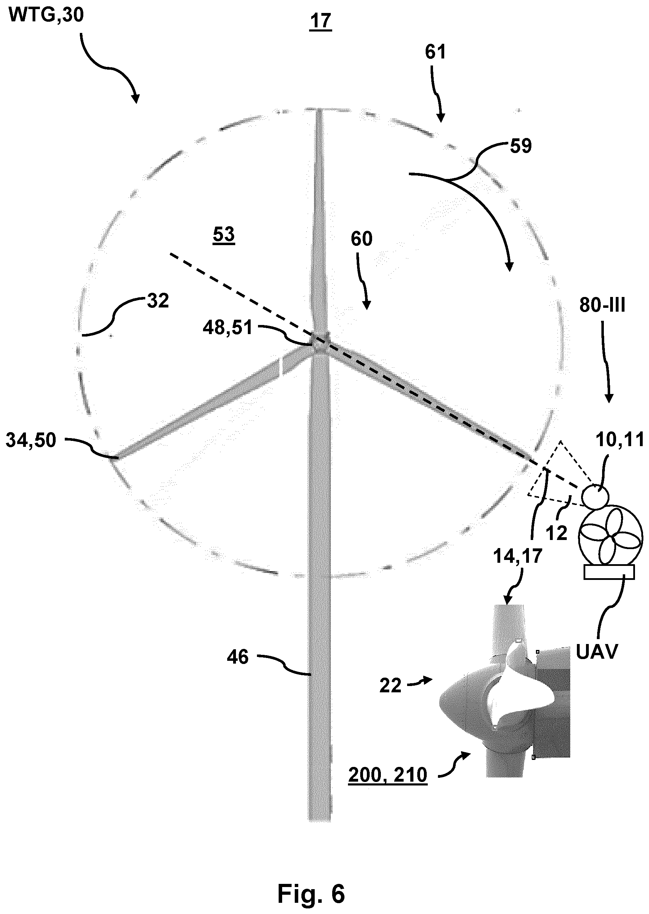

The method of diagnosing a blade 50 along the pitch - line of sight 17 is described in greater detail in the figure description of figs. 6-10.

The UAV-IV at position 80-IV comprises a visual inspection system having a line of sight 14, 18 being a leading edge 17 - line of sight 18 and a field of view 12 about the line of sight 14, 18.

The UAV-V at position 80-V comprises a visual inspection system having a line of sight 14, 19 being a trailing edge 19 - line of sight 18 and a field of view 12 about the line of sight 14, 18.

UAV-IV and UAV-V are positioned geometrically incorrect in the figure. The positions 80-IV and 80-V will both be within the rotor plane 53 in order to get a view along the edges of the blade 50.

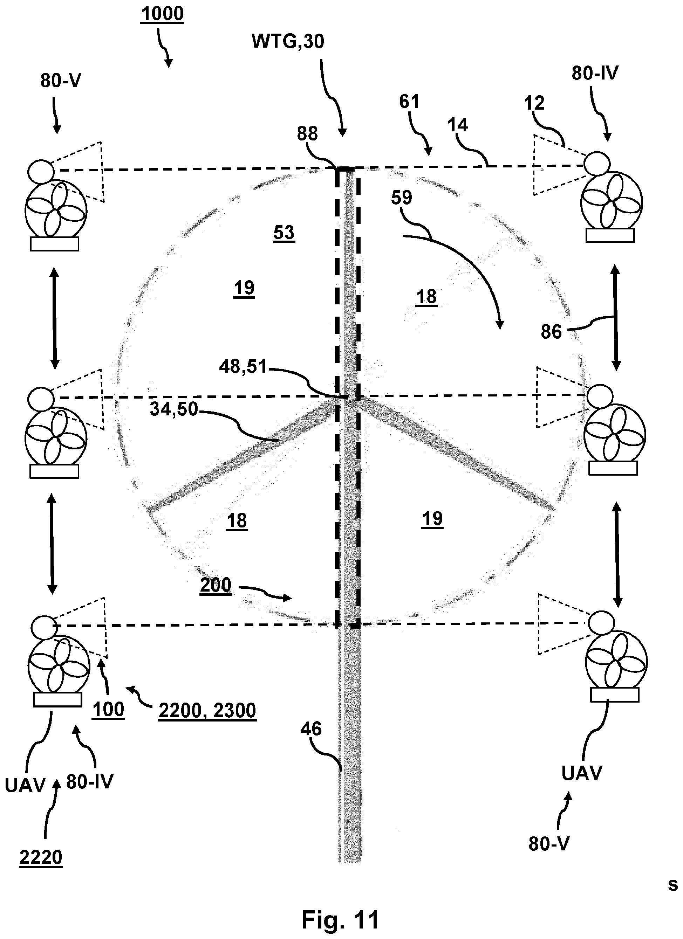

The method of diagnosing a blade 50 along the leading edge and the trailing edge is described in greater detail in the figure description of figs. 11-14.

It will of course be possible to deviate from each of the exact positions of position 80I, 80-II, 80IV, 80V while still being able to perform a method of visually diagnosing 1000 a moving part 34. How far it is possible to deviate can be determined through experiments which will determine the tolerance of the method of visually diagnosing 1000.

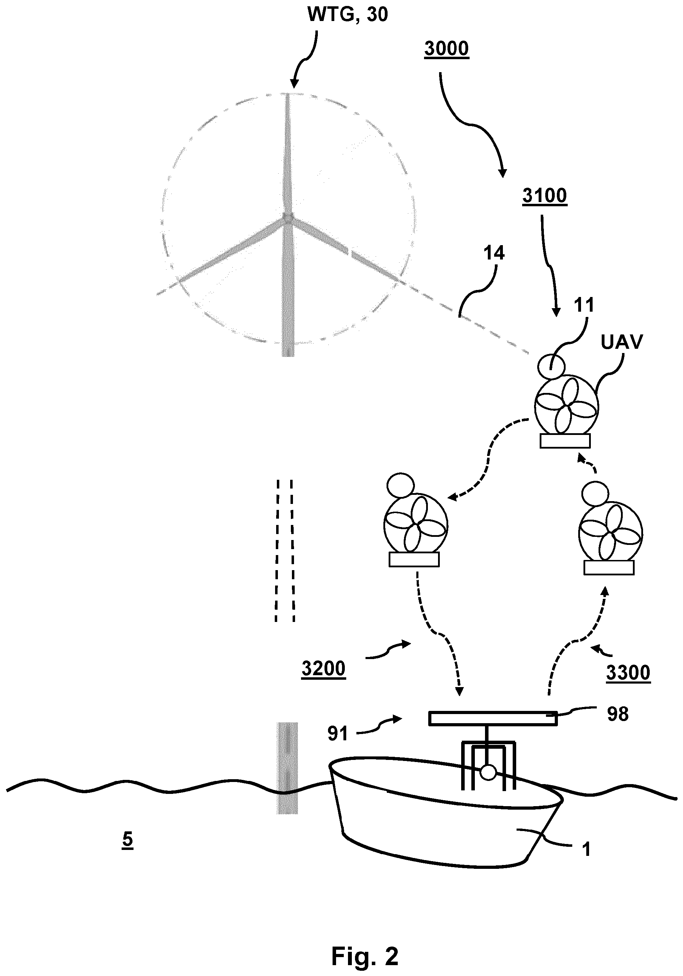

Figure 2 illustrates visual inspection of an offshore wind turbine generator WTG 30.

Furthermore figure 2 illustrates a method of performing 3000 an unmanned aerial vehicle (UAE) visual inspection of an offshore wind turbine 30 using a visual inspection system 10 and a vessel 1 with an adaptive platform 91. The adaptive platform 91 has a helipad 98 configured to support an unmanned aerial vehicle (UAV). The UAV may comprise a camera 11 with a line of sight 14 and a field of view 12.

The method may comprise an act of: positioning 3100 the unmanned aerial vehicle (UAV) relative to the offshore wind turbine 30 with the line of sight (14) towards the wind turbine 30.

There is an act of capturing 200 at least one image 22 of the field of view 12 in the line of sight 14 using the camera 11.

There is an act of landing 3200 the unmanned aerial vehicle (UAV) on the helipad 98 whilst adjusting 2200 the helipad 98 (i.e. platform for supporting the drone) of the adaptive platform 91.

As outlined in the previous figures, there are acts of diagnosing structural aspects of the wind turbine generator 30 by comparing 500 the at least one other captured image 22 with the at least one reference image 20.

There may be an act of lifting 3300 the unmanned aerial vehicle (UAV) from the helipad 98 whilst adjusting 2200 the adaptive platform 91.

As outlined in the previous figures, acts of adjusting 2200 is performed by a first adaptive platform 91 supported by a second adaptive platform 91, wherein the first adaptive platform 91 is stabilizing the helipad 98 and the second adaptive platform II is stabilizing the first adaptive platform I.

The UAV can be positioned in any of the positions shown in figure 1 to perform a method of diagnosing.

Figure 3 illustrates visual inspection of a suction side and/or pressure side of a rotor blade 50.

The wind turbine generator WTG 30 comprises a wind turbine tower 46, a nacelle 48, a rotor 51 and three rotor blades 50 rotating in a rotor plane 53 in a rotation direction. Thus, the rotor blades 50 can be moving parts 34 to be diagnosed, according to the invention. The difference between diagnosing a suction side and a pressure side of the blade 50 is a positioning of an UAV as all other steps are similar.

The azimuth 61 for the three blades are 90 degrees, 210 degrees and 330 degrees.

The UAV comprises a visual inspection system 10 having a camera 11 and a field of view 12 defined by the line of sight 14.

If the UAV is positioned in position 80-I, the UAV will diagnose the suction side of the blade 50. If the UAV is positioned in position 80-II, the UAV will diagnose the pressure side of the blade 50.

A blade 50 has a length making it difficult to get the entire suction side or pressure side in a single captured image while enabling proper diagnosing. Thus, the visual inspection system will capture a series of images i.e. captured images 22 along the radial coordinate at an azimuth angle equal to zero, which is shown by the outline box called the inspection path 88, while the UAV moves along a flight path 86.

The UAV can in principle capture a series of images 22 an any azimuth angle at different radial coordinates. It is however just simpler to move along a straight flight path 86.

The shown positioning of the UAV is geometrically incorrect as the UAV would otherwise block the shown view of the inspection path 88.

Thereby, a method of visually diagnosing 1000 a moving part 34 of an operating wind turbine generator WTG 30 is performed. The method 1000 comprises acts as follows.

There is an act of positioning 2300 the unmanned airborne vehicle UAV carrying the visual inspection system 10 in a position 80, 80I, 80II in the vicinity of the wind turbine generator WTG.

There is an act of pointing 100 the visual inspection system 10 with a field of view 12 about a line of sight 14, 15, 16 towards the wind turbine generator WTG, which in the present figure is either the suction side - line of sight 16 or the pressure side - line of sight 15.

There is an act of stabilizing 2220 the unmanned airborne vehicle UAV at the position 80.

There is an act of triggering 210. The act of triggering may be of capturing 200 of images 22 of the field of view 12 using the visual inspection system 10.

There is an act of diagnosing 600 structural aspects of the wind turbine generator WTG as a function of the captured images 22.

The act of positioning 2300 is performed as a function of a region of interest ROI on the wind turbine generator (WTG) identified in a captured image 22.

The act of stabilizing 2220 is performed as a function of a region of interest (ROI) on the wind turbine generator (WTG) identified in a captured image 22.

The method 1000 is performed by positioning 2300 the unmanned airborne vehicle UAV along a flight path 86 relative to the wind turbine generator WTG and wherein the act of triggering 210 is performed as a function of a distance between the unmanned airborne vehicle UAV and the moving part 34.

The distance may be determined using a LiDAR.

The method of visually diagnosing 1000 may be performed by positioning 2300 the unmanned airborne vehicle (UAV) along a flight path 86 relative to the wind turbine generator (WTG) and wherein the act of triggering 210 is performed as a function of a distance between the unmanned airborne vehicle (UAV) and the moving part 34.

The method 1000 is performed repetitively as required with one or more repetitive acts of:
- positioning 2300 the unmanned airborne vehicle UAV off the rotational plane;
- pointing 100 the line of sight 14 substantially in a plane perpendicular to the rotational plane 32;
- repetitive positioning 2300 along an inspection path 88 substantially along a radial 60 of the rotor plane 53 of the wind turbine generator WTG.

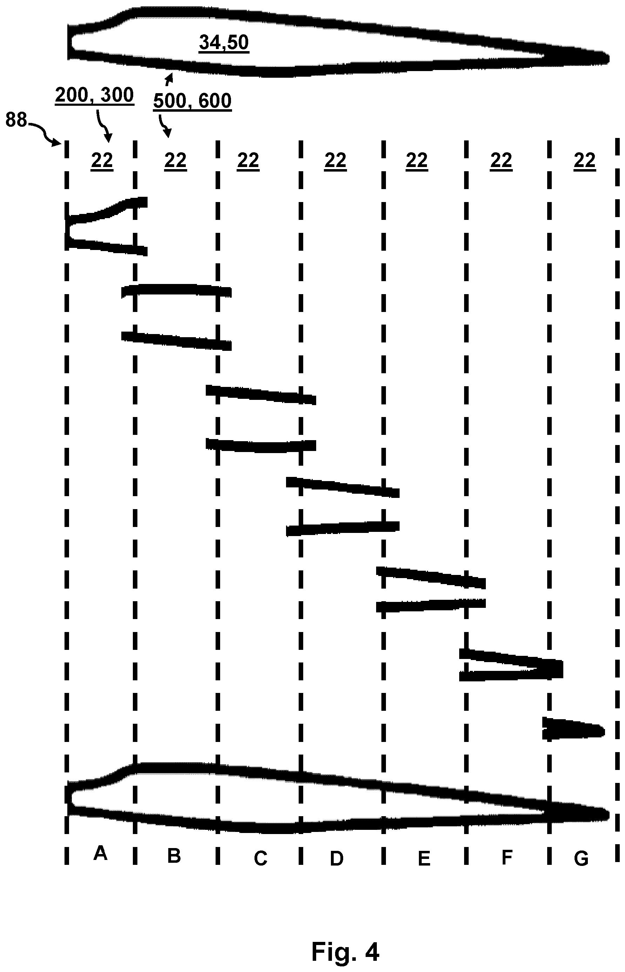

Figure 4 illustrates a principle of visual inspection by capturing images of a rotor blade 50, 34 as shown in fig. 3.

The UAV has captured a series of captured images 22 along an inspection path 88, which captured images 22 together disclose a suction side or a pressure side of a blade 50. The act of diagnosing 600 structural aspects of the wind turbine generator WTG as a function of the captured images 22 may then be performed.

The act of diagnosing 600 may be performed on a single captured image or on two or more captured images.

The captured images 22 are time stamped with a clock synchronized with a wind turbine operational clock.

The method can perform an act of selecting 300 at least one reference image 20 amongst the captured images 22 or from elsewhere.

The reference image 20 may be an earlier captured image, which is taken on an earlier date and thereby any permutations can be detected by performing an act of comparing 500 the at least one other captured image 22 with the at least one reference image 20 and performing the act of diagnosing 600 structural aspects of the wind turbine generator WTG as a function of the result of the act of comparing 500.

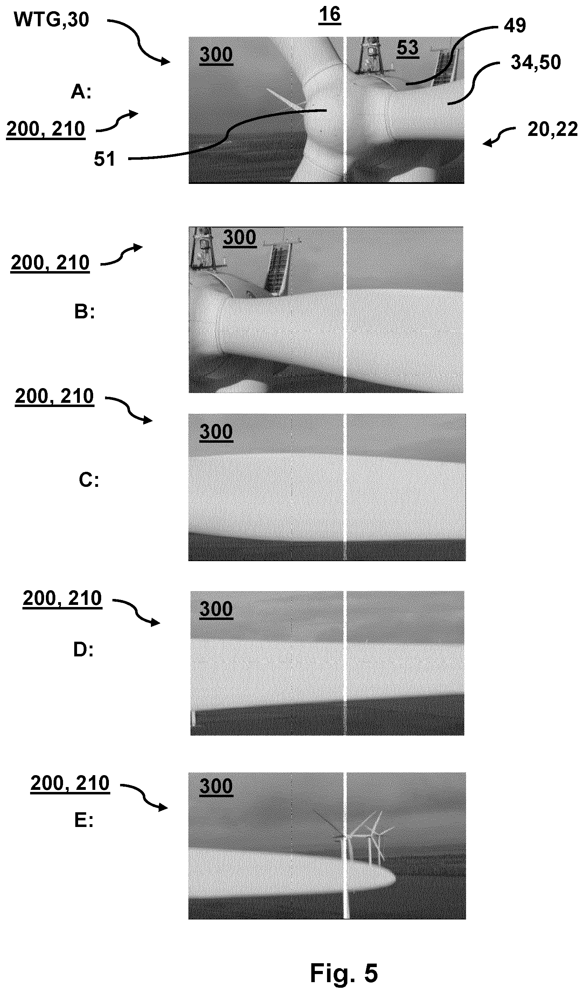

The captured images 22 in figure 5 could be the reference images 20 for a later performed method of visually diagnosing 100.

Figure 5 illustrates a principle of visual inspection by capturing images 22 of a rotor blade 50.

The figure shows the result of a field test of an UAV with a simple video camera moving radially in the rotor plane 53 from the rotor 51 towards a tip of the blade 50 (A-E). The last figure 5E is a bit blurred due to the limitations of the video camera.

However, these captured images could be used at a later time as the reference images 20 to be used in the method of visually diagnosing 1000.

The presented captured images are captured along a pressure side - line of sight 15 but the act of capturing could be repeated along the suction side - line of sight 16.

Figure 6 illustrates visual inspection of a pitch of a rotor blade 50.

A wind turbine generator WTG 30 comprises a wind turbine tower 46, a nacelle 48, a rotor 51 and three rotor blades 50 rotating in a rotor plane 53 in a rotation direction. Thus, the rotor blades 50 can be moving parts 34 to be diagnosed according to the invention. The azimuth 61 for the three blades are 90 degrees, 210 degrees and 330 degrees.

In the figure, an UAV has a visual inspection system 10 comprising a camera 11. The UAV is substantially positioned in the rotor plane 53. The camera comprises a field of view 12 along the line of sight 14, which is along the radial 60 in the rotor plane 53 and in the present case at the azimuth 61 angle of 330 degrees. Thereby, the UAV is in position 80-III.

The field of view 14 could be at any other azimuth 61 angle as long as the field of view 12 is along the radial 60.

Thereby, the field of view 12 is a pitch - line of sight 19. A captured image 22 is shown along said pitch - line of sight 19.

Thereby, a method of visually diagnosing 1000 a moving part 34 of an operating wind turbine generator WTG 30. The method 1000 comprises acts of:
- positioning 2300 an unmanned airborne vehicle UAV carrying a visual inspection system 10 in a position 80 in the vicinity of the wind turbine generator WTG;
- pointing 100 the visual inspection system 10 with a field of view 12 about a line of sight 14 towards the wind turbine generator WTG;
- stabilizing 2220 the unmanned airborne vehicle UAV at the position 80;
- triggering 210 of
- capturing 200 of images 22 of the field of view 12 using the visual inspection system 10;
- diagnosing 600 structural aspects of the wind turbine generator WTG as a function of the captured images 22.

The acts are performed repetitively as required with one or more repetitive acts of:
- positioning 2300 the unmanned airborne vehicle UAV substantially in the rotational plane 32 of the wind turbine generator WTG;
- pointing 100 the line of sight 14 substantially towards the hub 49 or the nacelle 48;
- triggering 210 capturing 200 as a function of the moving part 34 of the wind turbine generator WTG 30.

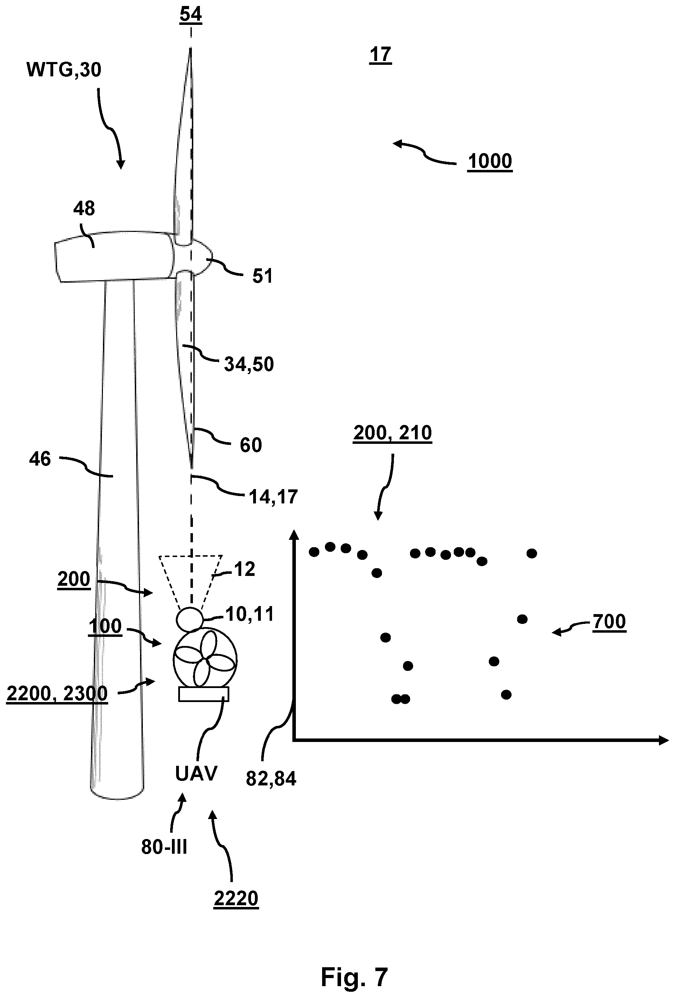

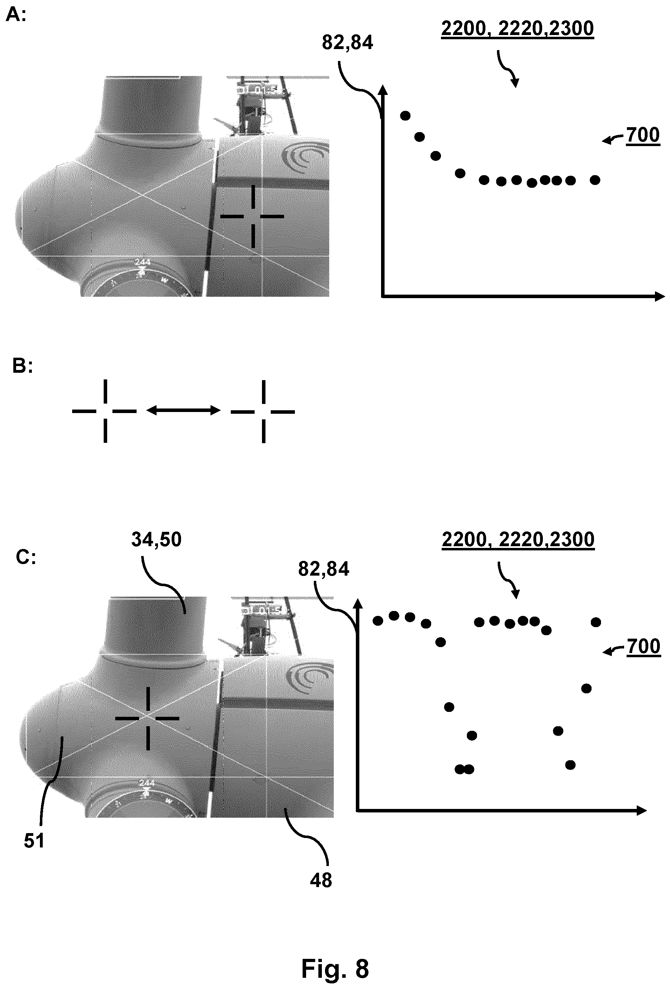

The triggering is discussed in greater detail in figure 7 and figure 8.

Figure 7 illustrates visual inspection of a pitch of a rotor blade 50 and distance measuring.

The figure discloses a wind turbine generator WTG 30, which comprises a wind turbine tower 46, a nacelle 48, a rotor 51 and three rotor blades 50 rotating in a rotor plane 53 in a rotation direction. Thus, the rotor blades 50 can be moving parts 34 to be diagnosed according to the invention.

The figure further discloses a UAV comprising a visual inspection system 10 including a camera 11. The UAV is substantially positioned in the rotor plane 53 at position 80-III.

The visual inspection system 10 has a field of view 50 along a line of sight 14, 19 which is along the radial 60 of the rotor plane 53 i.e. the line of sight 14 is a pitch - line of sight 19. The azimuth 61 angle of the UAV would be 270 degrees.

The UAV is further equipped with means for measuring a distance 84 between the UAV and the nacelle 48 or the rotor 51. The means can be a LiDAR.

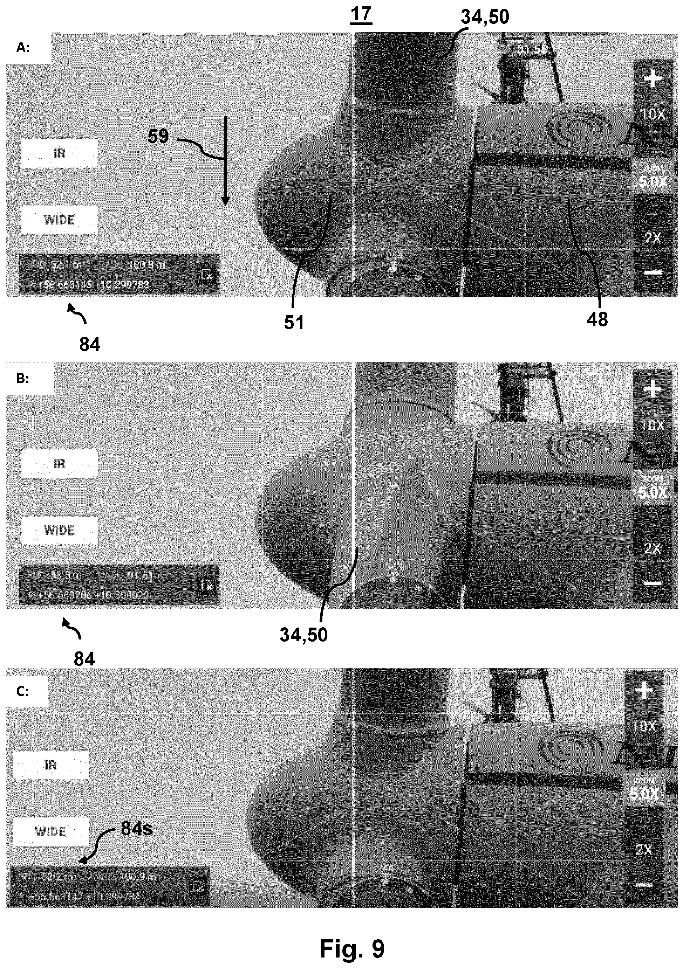

A graph is shown illustrating such a distance measurement as a function of time. In this case time would be along the first axis, and the second axis comprises the measured distance 84 to the rotor 51, which at the same time is a relative position 82. Figure 9 discloses three measurements of a WTG having rotor blades 50 with a length of 20m.

The triggering 210 is described in figure 6 as function of the decrease in distance 84.

Figure 8 illustrates positioning of a visual inspection system 10 for a view of a pitch of a rotor blade 50.

The visual inspection system 10 being carried by an UAV is at first positioned at position 80-III by an act of establishing 700 relative position 82 or distance 84 between the unmanned airborne vehicle UAV and the wind turbine generator WTG. In figure 8A the UAV is positioned by measuring relative position 82 or distance 84 to the nacelle 48 this is illustrated relative to the cross air. This is disclosed in graph-A showing time along the first axis and relative position 82 or distance 84 along the second axis.

An act of stabilizing 2220 is performed as a function of the relative position 82 or distance 84, so that the relative position 82 or distance 84 is substantially stable.

Figure 8B discloses that the distance measuring is moved from the nacelle 48 to the rotor 51 and as a consequence, the distance 84 will vary with time, due to the rotation of the rotor 51 as shown in figure 8C.

Thereby, the act of triggering 210 is performed as a function of the relative position 82 or distance 84 when the relative position 82 or distance 84 is changing.

Figure 9 illustrates three captured images 22 from an initial test. The measured distance 84 is shown in the lower right corner of each image.

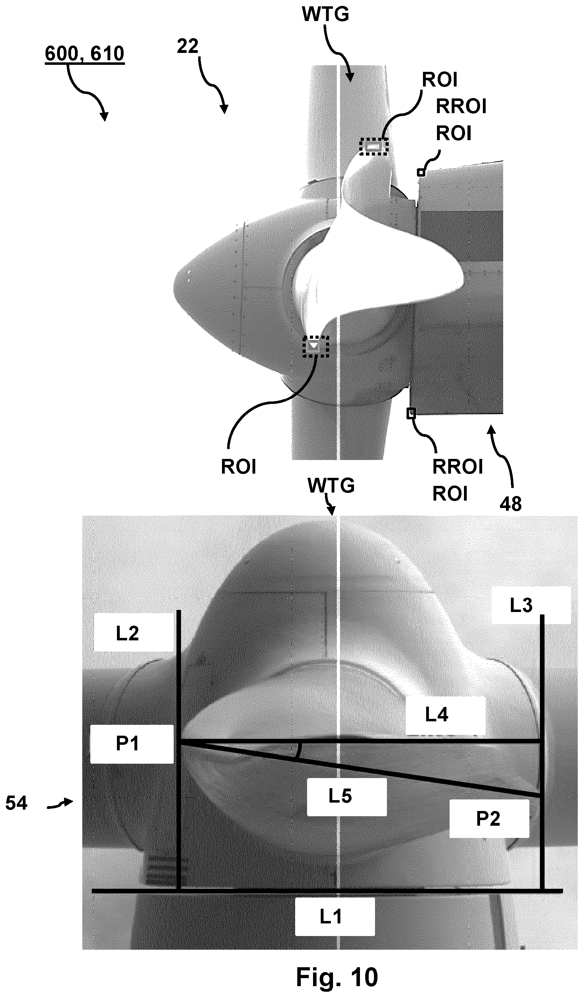

Figure 10 illustrates a captured image of a rotor blade and metrics applied to diagnosing the blade.

Illustrated is a specific metric 52 that may be applied to a reference image for an inspection of relative blade pitch misalignment. The example comprises an act of determining 610 relative blade pitch misalignment 58 between at least two blades 50, wherein the act of inspecting 600 involves applying a set of pitch angle metrics 54 to the reference image 20 and the at least one other captured image 22, and wherein the act of comparing 500 is performed on the pitch angle metrics 54 of the reference image 20 and those of the at least one other captured image 22.

In the specific case the pitch angle metric 54 may be applied for both static and dynamic measurements using the following steps.

Step 1: Define a line (L1) which connects the two nacelle edges. Step 2: Define a second line L2 perpendicular (90°) to line L1, which is tangent to the leading edge of the blade. Step 3: Define the point on line L2, which is tangent to the leading edge of the blade as point P1. Step 4: Define a third line L3, perpendicular to line L1 and tangent to the trailing edge of the blade. Step 5: Define the point on line L3, which is tangent to the leading edge as P2. Step 6: Define a fourth line L4, perpendicular to lines L2 and L3 (parallel to L1), which will be crossing point P1. Step 7: Define a fifth line L5, connecting point P1 on the leading edge of the blade and point P2 on the trailing edge of the blade. Step 8: Calculate the (reference) angle between lines L4 and L5.

The outline method is robust and remains consistent regardless of the wind speed or the rotational speed of the rotor.

There may be acts of sorting and comparing, using an applied metric 52 exemplified by a very simplified blade pitch metric 54 that can be defined on reference image 20 and/or captured or sorted images.

With reference to the outlined sorting there may be involved an act of defining one or more regions of interest ROI of the wind turbine generator (WTG) on the reference image 20 and the at least one other captured image 22. This is illustrated by at least one region of interest (ROI) that is a reference region of interest (RROI) which is defined on the nacelle 48 of the WTG. In this case, two RROIs are defined allowing defining a line or a reference metric 52. Such reference regions of interests RROIs may be scaled according to actual dimensions; however, this may not be necessary. Furthermore, other regions of interest ROIs may be relative such as the indicated ROIs on the blade defined on the respective leading and trailing edge of the blade.

For the diagnosis or inspection analysis and calculation of the relative blade pitch misalignment between the wind turbine blades, a variety of image processing methods may be used. These include pattern and feature recognition, pixel coordinate detection, pixel-by-pixel difference, brightness management, angle calculations, and slope and proportion evaluations.

In general, a diagnosis may apply the following procedure. Step 1: The operator selects multiple regions of interest ROI, as seen by the rectangles on figure 8, Some ROIs are going to be on fixed features, e.g. on the nacelle 48 and thus, be reference regions of interest RROIs. Other regions of interest may be defined as ROIs on moving features, e.g. blade 50. Step 2: The automated image analysis software detects the defined edges of the first image in all the other sorted blade images and calculates the angle difference between the two lines (e.g. nacelle line and blade line) for each of them. Step 3: After the calculation of the reference angles for each blade, the reference angle result for each blade is subtracted from the corresponding result of the previous blade, e.g. Blade A - Blade B, and the relative blade pitch misalignment between the three blades is calculated.

The advantage of the outline inspection of relative blade pitch misalignment between the wind turbine blades is the improvement in accuracy and time efficiency in order for the inspection to be performed on site.

The outlined combination of image capturing from a drone and the specific diagnosing of dynamic aspects highlights the efficiency of the methods of diagnosing a wind turbine generator during operation.

Figure 11 illustrates visual inspection of leading edge and/or trailing edge of a rotor blade 50.

A wind turbine generator WTG 30 comprises a wind turbine tower 46, a nacelle 48, a rotor 51 and three rotor blades 50 rotating in a rotor plane 53 in a rotation direction. Thus, the rotor blades 50 can be moving parts 34 to be diagnosed, according to the invention. The azimuth 61 for the three blades are 90 degrees, 210 degrees and 330 degrees.

An UAV is present on the right and left side of the wind turbine generator WTG, however, a single UAV on one side would be able to capture images 22 of the respective leading edge and trailing edge.

The UAV comprises a visual inspection system 10 including a camera 11. The UAV is substantially positioned in the rotor plane 53 at position 80-IV or 80-V. The visual inspection system 10 has a field of view 50 along a line of sight 14, 18, 19 which is substantially perpendicular to the wind turbine tower 46 to capture the leading or trailing edge, thus the line of sight is either a leading edge - line of sight 17 or a trailing edge - line of sight 18.

The UAV can by moving along a vertically flight path 86 inspect the trailing and/or leading edges of a blade 50 along an inspection path 88. The UAV will in the shown case in effect move to and from position 80-IV to position 80-V.

Thereby, a method of visually diagnosing 1000 a moving part 34 of an operating wind turbine generator WTG 30, comprises acts of:
- positioning 2300 an unmanned airborne vehicle UAV carrying a visual inspection system 10 in a position 80 in the vicinity of the wind turbine generator WTG;
- pointing 100 the visual inspection system 10 with a field of view 12 about a line of sight 14 towards the wind turbine generator WTG;
- stabilizing 2220 the unmanned airborne vehicle UAV at the position 80;
- triggering 210 of
- capturing 200 of images 22 of the field of view 12 using the visual inspection system 10;
- diagnosing 600 structural aspects of the wind turbine generator WTG as a function of the captured images 22.

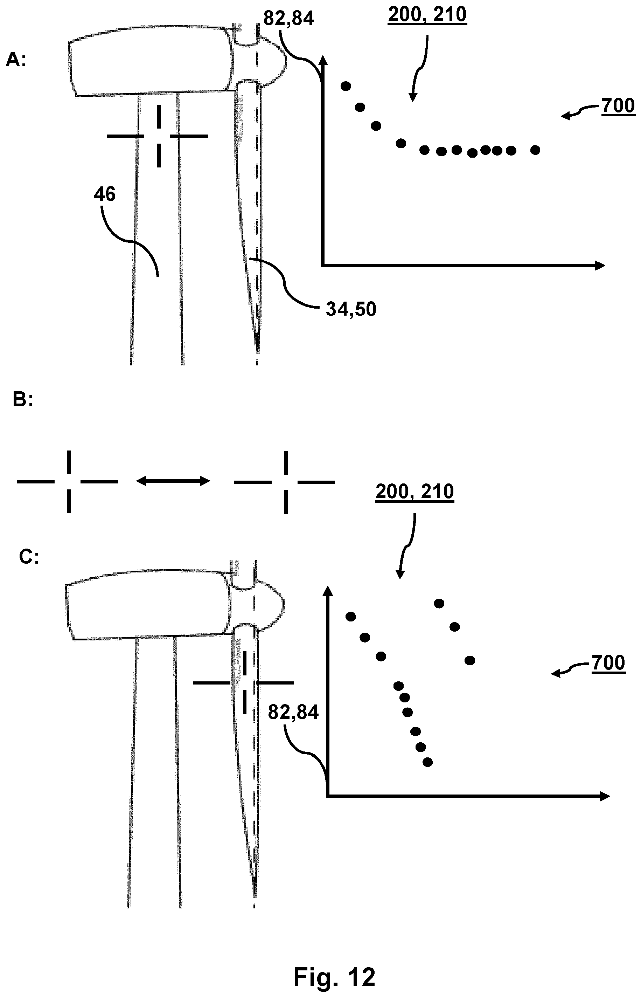

Figure 12 illustrates visual inspection of a trailing edge or a leading edge of a rotor blade 50 and distance measuring.

The visual inspection system 10 being carried by an UAV is at first positioned at position 80-IV or position 80-V by an act of establishing 700 relative position 82 or distance 84 between the unmanned airborne vehicle UAV and the wind turbine generator WTG. In figure 12A the UAV is positioned by measuring relative position 82 or distance 84 to the wind turbine tower 46, this is illustrated relative to the cross air. This is disclosed in graph-A showing time along the first axis and relative position 82 or distance 84 along the second axis.

An act of stabilizing 2220 is performed as a function of the relative position 82 or distance 84, so that the relative position 82 or distance 84 is substantially stable.

Figure 12B discloses that the distance measuring is moved from the wind turbine tower 46 to the rotor 51 and, as a consequence, the distance 84 will vary with time due to the rotation of the rotor 51 as shown in fig. 12C.

Thereby, the act of triggering 210 is performed as a function of the relative position 82 or distance 84 when the relative position 82 or distance 84 is changing.

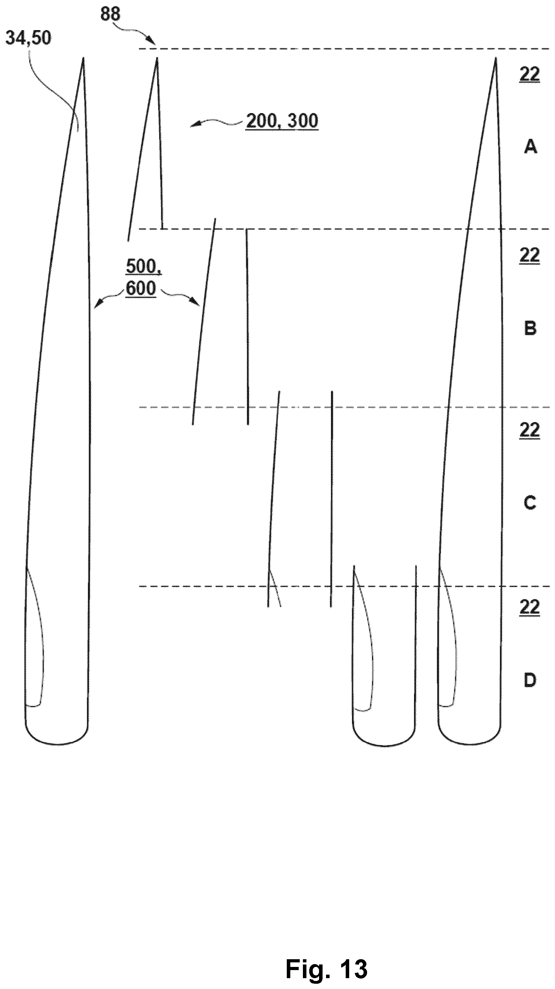

Figure 13 illustrates a principle of visual inspection by capturing images 22 of a trailing edge or a leading edge of a rotor blade 50.

The UAV in figure 11 has captured a series of captured images 22 along an inspection path 88, which captured images 22 together disclose a leading edge or a trailing edge of a blade 50. The act of diagnosing 600 structural aspects of the wind turbine generator WTG as a function of the captured images 22 may then be performed.

The act of diagnosing 600 may be performed on a single captured image or on two or more captured images.

The captured images 22 are time stamped with a clock synchronized with a wind turbine operational clock.

The method can perform an act of selecting 300 at least one reference image 20 amongst the captured images 22 or from elsewhere.

The reference image 20 may be an earlier captured image, which is taken on an earlier date and, thereby, any permutations can be detected by performing an act of comparing 500 the at least one other captured image 22 with the at least one reference image 20 and performing the act of diagnosing 600 structural aspects of the wind turbine generator WTG as a function of the result of the act of comparing 500.

## Claims

1. A method of visually diagnosing (1000) a moving part (34) of an operating wind turbine generator (WTG, 30), the method (1000) comprising acts of:
- positioning (2300) an unmanned airborne vehicle (UAV) carrying a visual inspection system (10) in a position (80) in the vicinity of the wind turbine generator (WTG);
- pointing (100) the visual inspection system (10) with a field of view (12) about a line of sight (14) towards the wind turbine generator (WTG);
- stabilizing (2220) the unmanned airborne vehicle (UAV) at the position (80);
- triggering (210) of
- capturing (200) of images of the field of view (12) as captured images (22) using the visual inspection system (10);
- diagnosing (600) structural aspects of the wind turbine generator (WTG) as a function of the captured images (22), wherein the act of positioning (2300) is performed as a function of a region of interest (ROI) on the wind turbine generator (WTG) identified in a captured image (22), wherein the region of interest (ROI) is a stationary part of the of the wind turbine generator (WTG, 30), and **characterised in that** the act of triggering (210) is performed by using live image analysis for brightness change detection.

2. The method of visually diagnosing (1000) according to claim 1, wherein the stationary part of the of the wind turbine generator (WTG, 30) is a tower (46) or a nacelle (48).

3. The method of visually diagnosing (1000) according to claim 1 or 2, wherein the act of stabilizing (2220) is performed as a function of a region of interest (ROI) on the wind turbine generator (WTG) identified in a captured image (22).

4. The method of visually diagnosing (1000) according to any one or more of claims 1 to 3, wherein the method (1000) is performed by positioning (2300) the unmanned airborne vehicle (UAV) along a flight path (86) relative to the wind turbine generator (WTG) and wherein the act of triggering (210) is performed as a function of a distance between the unmanned airborne vehicle (UAV) and the moving part (34).

5. The method of visually diagnosing (1000) according to any one or more of claims 1 to 4, wherein there is a further act of establishing (700) relative position (82) or distance (84) between the unmanned airborne vehicle (UAV) and the wind turbine generator (WTG).

6. The method of visually diagnosing (1000) according to any one or more of claims 1 to 5, wherein the acts of:
- positioning (2300) and/or stabilizing (2220) is performed as a function of the relative position (82) or distance (84) so that the relative position (82) or distance (84) is substantially stable; and
- triggering (210) is performed as a function of the relative position (82) or distance (84) when the relative position (82) or distance (80) is changing.

7. The method of visually diagnosing (1000) according to any one or more of claims 1 to 6, wherein the captured images (22) are time stamped with a clock synchronized with a wind turbine operational clock.

8. The method of visually diagnosing (1000) according to any one or more of claims 1 to 7, wherein there are one or more repetitive acts of:
- positioning (2300) the unmanned airborne vehicle (UAV) substantially in the rotor plane (32) of the wind turbine generator (WTG);
- pointing (100) the line of sight (14) substantially towards the hub (48) or the nacelle (49); and
- triggering (210) capturing (200) as a function of the moving part (34) of the wind turbine generator (WTG, 30).

9. The method of claim 8, further comprising acts of:
- selecting (300) at least one reference image (20) amongst the captured images (22) or from elsewhere;
- comparing (500) the at least one other captured image (22) with the at least one reference image (20); and
- diagnosing (600) structural aspects of the wind turbine generator (WTG) as a function of the result of the act of comparing (500), wherein the act of comparing (500) comprises an act of determining (610) a deviation amongst rotor blades (50), wherein the act of diagnosing (600) involves applying a set of blade metrics (52) to the reference image (20), and wherein the act of comparing (500) is performed by blade metrics (52) applied to the reference image (20) compared to the blade metrics (52) of at least one captured image (22).

10. The method of visually diagnosing (1000) according to any one or more of claims 1 to 7, wherein the acts are performed repetitively as required with one or more repetitive acts of:
- positioning (2300) the unmanned airborne vehicle (UAV) substantially in the rotational plane (32) of the wind turbine generator (WTG);
- pointing (100) the line of sight (14) substantially towards the hub (49) or the nacelle (48);
- triggering (210) capturing (200) in an azimuth angle of rotation;
- repetitive positioning (2300) along an inspection path (88) substantially vertically whilst triggering (210) capturing (200) as a function of the rotor blade (50) substantially in the same azimuth angle of rotation.

11. The method of visually diagnosing (1000) according to any one or more of claims 1 to 7, wherein the acts are performed repetitively as required with one or more repetitive acts of:
- positioning (2300) the unmanned airborne vehicle (UAV) off the rotational plane (32);
- pointing (100) the line of sight (14) substantially in a plane perpendicular to the rotational plane (32);
- repetitive positioning (2300) along an inspection path (88) substantially along a radial (60) of the rotor plane (53) of the wind turbine generator (WTG).

12. The method of visually diagnosing (1000) according to claim 10 or 11, further comprising acts of
- selecting (300) at least one reference image (20) amongst the captured images (22) or from elsewhere;
- comparing (500) the at least one other captured image (22) with the at least one reference image (20); and
- diagnosing (600) structural aspects of the wind turbine generator (WTG) as a function of the result of the act of comparing (500).

13. The method of visually diagnosing (1000) according to any one or more of claims 1 to 12, wherein the method is performed (3000) is of an offshore wind turbine (30) and with the unmanned airborne vehicle (UAV) being operated from a vessel (1) with an adaptive platform (91) with a helipad (98) configured to support an unmanned aerial vehicle (UAV); the method (1000) comprising at least a further acts of:
- landing (3200) the unmanned aerial vehicle (UAV) on the helipad (98) whilst adjusting (2200) the helipad (98) of the adaptive platform (40).

14. The method of visually diagnosing (1000) according to any one or more of claims 1 to 13, wherein the act of triggering (210) is performed as a function of brightness conditions on a specified region of interest (ROI).

15. The method of visually diagnosing (1000) according to claim 14, wherein a blade passes through the specific region of interest (ROI).

16. The method of visually diagnosing (1000) according to claim 15, wherein the act of triggering is performed as a function of a mean value of the brightness in the specific ROI.

## Patentansprüche

1. Verfahren zur visuellen Diagnose (1000) eines beweglichen Teils (34) eines in Betrieb befindlichen Windkraftgenerators (WTG, 30), das Verfahren (1000) folgende Vorgänge umfassend:
- Positionieren (2300) eines unbemannten Luftfahrzeugs (UAV) das ein visuelles Inspektionssystem (10) trägt, in einer Position (80) in der Nähe des Windkraftgenerators (WTG);
- Ausrichten (100) des visuellen Inspektionssystems (10) mit einem Sichtfeld (12) um eine Sichtlinie (14) in Richtung des Windkraftgenerators (WTG);
- Stabilisieren (2220) des unbemannten Luftfahrzeugs (UAV) an der Position (80);
- Auslösen (210) von
- Erfassen (200) von Bildern des Sichtfelds (12) als erfasste Bilder (22) unter Verwendung des visuellen Inspektionssystems (10);
- Diagnose (600) struktureller Aspekte des Windkraftgenerators (WTG) als Funktion der aufgenommenen Bilder (22), wobei der Vorgang des Positionierens (2300) als Funktion einer in einem aufgenommenen Bild identifizierten Bereich von Interesse (ROI) auf dem Windkraftgenerator (WTG) durchgeführt wird (22), wobei der Bereich von Interesse (ROI) ein stationärer Teil des Windkraftgenerators (WTG, 30) ist, und **dadurch gekennzeichnet, dass** der Vorgang des Auslösens (210) unter Verwendung einer Live-Bildanalyse zum Erkennen von Helligkeitsänderungen durchgeführt wird.

2. Verfahren zur visuellen Diagnose (1000) nach Anspruch 1, wobei der stationäre Teil des Windkraftgenerators (WTG, 30) ein Turm (46) oder eine Gondel (48) ist.

3. Verfahren zur visuellen Diagnose (1000) nach Anspruch 1 oder 2, wobei der Vorgang der Stabilisierung (2220) als Funktion eines in einem aufgenommenen Bild (22) identifizierten Bereichs von Interesse (ROI) an dem Windkraftgenerator (WTG) durchgeführt wird.

4. Verfahren zur visuellen Diagnose (1000) nach einem oder mehreren der Ansprüche 1 bis 3, wobei das Verfahren (1000) durchgeführt wird, indem des unbemannten Luftfahrzeugs (UAV) entlang einer Flugbahn (86) relativ zum Windkraftgenerator (WTG) positioniert (2300) wird und wobei der Vorgang des Auslösens (210) als Funktion eines Abstands zwischen dem unbemannten Luftfahrzeug (UAV) und dem beweglichen Teil (34) durchgeführt wird.

5. Verfahren zur visuellen Diagnose (1000) nach einem oder mehreren der Ansprüche 1 bis 4, wobei ein weiterer Vorgang zum Ermitteln (700) der relativen Position (82) oder des Abstands (84) zwischen dem unbemannten Luftfahrzeug (UAV) und dem Windkraftgenerator (WTG) vorgesehen ist.

6. Verfahren zur visuellen Diagnose (1000) nach einem oder mehreren der Ansprüche 1 bis 5, wobei die folgenden Vorgänge durchgeführt werden:
- Positionieren (2300) und/oder Stabilisieren (2220) wird als Funktion der relativen Position (82) oder des Abstands (84) durchgeführt, sodass die relative Position (82) oder der Abstand (84) im Wesentlichen stabil ist; und
- Auslösen (210) wird in Abhängigkeit von der relativen Position (82) oder des Abstands (84) durchgeführt, wenn sich die relative Position (82) oder der Abstand (80) ändert.

7. Verfahren zur visuellen Diagnose (1000) nach einem oder mehreren der Ansprüche 1 bis 6, wobei die aufgenommenen Bilder (22) mit einem Zeitstempel versehen werden, der mit einer mit dem Vorgang der Windkraftanlage synchronisierten Uhr abgestimmt ist.

8. Verfahren zur visuellen Diagnose (1000) nach einem oder mehreren der Ansprüche 1 bis 7, wobei eine oder mehrere sich wiederholende Vorgänge stattfinden:
- Positionieren (2300) des unbemannten Luftfahrzeugs (UAV) im Wesentlichen in der Rotorebene (32) des Windkraftgenerators (WTG);
- Ausrichten (100) der Sichtlinie (14) im Wesentlichen in Richtung der Nabe (48) oder der Gondel (49); und
- Auslösen (210) des Erfassens (200) als Funktion des beweglichen Teils (34) des Windkraftgenerators (WTG, 30).

9. Verfahren nach Anspruch 8, ferner umfassend die folgenden Vorgänge:
- Auswählen (300) mindestens eines Referenzbildes (20) aus den aufgenommenen Bildern (22) oder aus einer anderen Quelle;
- Vergleichen (500) des mindestens einen anderen aufgenommenen Bildes (22) mit dem mindestens einen Referenzbild (20); und
- Diagnose (600) struktureller Aspekte des Windkraftgenerators (WTG) als Funktion des Ergebnisses des Vergleichsvorgangs (500), wobei der Vergleichsvorgang (500) einen Vorgang zum Bestimmen (610) einer Abweichung zwischen Rotorblättern (50) umfasst, wobei der Diagnosevorgang (600) das Anwenden eines Satzes von Blattmetriken (52) auf das Referenzbild (20) umfasst, und wobei der Vergleichsvorgang (500) durch die auf das Referenzbild (20) angewendeten Blattmetriken (52) im Vergleich zu den Blattmetriken (52) mindestens eines aufgenommenen Bildes (22) durchgeführt wird.

10. Verfahren zur visuellen Diagnose (1000) nach einem oder mehreren der Ansprüche 1 bis 7, wobei die Vorgänge wiederholt nach Bedarf mit einem oder mehreren sich wiederholenden Vorgängen durchgeführt werden:
- Positionieren (2300) des unbemannten Luftfahrzeugs (UAV) im Wesentlichen in der Drehebene (32) des Windkraftgenerators (WTG);
- Ausrichten (100) der Sichtlinie (14) im Wesentlichen in Richtung der Nabe (49) oder der Gondel (48);
- Auslösen (210) des Erfassens (200) in einem Azimutwinkel der Rotation;
- wiederholtes Positionieren (2300) entlang einer Inspektionsbahn (88) im Wesentlichen vertikal, während das Erfassen (200) in Abhängigkeit von der Rotorblattposition (50) im Wesentlichen im gleichen Azimutwinkel der Rotation ausgelöst wird (210).

11. Verfahren zur visuellen Diagnose (1000) nach einem oder mehreren der Ansprüche 1 bis 7, wobei die Vorgänge wiederholt nach Bedarf mit einem oder mehreren sich wiederholenden Vorgängen durchgeführt werden:
- Positionieren (2300) des unbemannten Luftfahrzeugs (UAV) außerhalb der Drehebene (32);
- Ausrichten (100) der Sichtlinie (14) im Wesentlichen in einer Ebene senkrecht zur Drehebene (32);
- wiederholtes Positionieren (2300) entlang einer Inspektionsbahn (88), die im Wesentlichen entlang einer Radialen (60) der Rotorebene (53) des Windkraftgenerators (WTG) verläuft.

12. Verfahren zur visuellen Diagnose (1000) nach Anspruch 10 oder 11, ferner umfassend die folgenden Vorgänge
- Auswählen (300) mindestens eines Referenzbildes (20) aus den aufgenommenen Bildern (22) oder aus einer anderen Quelle;
- Vergleichen (500) des mindestens einen anderen aufgenommenen Bildes (22) mit dem mindestens einen Referenzbild (20); und
- Diagnose (600) struktureller Aspekte des Windkraftgenerators (WTG) als Funktion des Ergebnisses des Vergleichs (500).

13. Verfahren zur visuellen Diagnose (1000) nach einem oder mehreren der Ansprüche 1 bis 12, wobei das Verfahren (3000) an einer Offshore-Windkraftanlage (30) durchgeführt wird und das unbemannte Luftfahrzeug (UAV) von einem Schiff (1) aus betrieben wird, das über eine adaptive Plattform (91) mit einem Hubschrauberlandeplatz (98) verfügt, der konfiguriert ist, um ein unbemanntes Luftfahrzeug (UAV) zu tragen; das Verfahren (1000) umfassend mindestens einen weiteren Vorgang:
- Landen (3200) des unbemannten Luftfahrzeugs (UAV) auf dem Hubschrauberlandeplatz (98) bei gleichzeitiger Anpassung (2200) des Hubschrauberlandeplatzes (98) der adaptiven Plattform (40).

14. Verfahren zur visuellen Diagnose (1000) nach einem oder mehreren der Ansprüche 1 bis 13, wobei der Vorgang des Auslösens (210) als Funktion der Helligkeitsbedingungen in einem bestimmten Bereich von Interesse (ROI) durchgeführt wird.

15. Verfahren zur visuellen Diagnose (1000) nach Anspruch 14, wobei ein Blatt durch den spezifischen Bereich von Interesse (ROI) geführt wird.

16. Verfahren zur visuellen Diagnose (1000) nach Anspruch 15, wobei der Vorgang des Auslösens als Funktion eines Mittelwerts der Helligkeit in dem spezifischen ROI durchgeführt wird.

## Revendications

1. Procédé de diagnostic visuel (1000) d'une pièce mobile (34) d'un générateur d'éolienne en fonctionnement (WTG, 30), le procédé (1000) comprenant les étapes :
- de positionnement (2300) d'un véhicule aérien sans pilote (UAV) transportant un système d'inspection visuelle (10) dans une position (80) à proximité du générateur d'éolienne (WTG) ;
- de pointage (100) du système d'inspection visuelle (10) avec un champ de vision (12) autour d'une ligne de visée (14) vers le générateur d'éolienne (WTG) ;
- de stabilisation (2220) du véhicule aérien sans pilote (UAV) à la position (80) ;
- de déclenchement (210) de
- de capture (200) d'images du champ de vision (12) sous forme d'images capturées (22) à l'aide du système d'inspection visuelle (10) ;
- de diagnostic (600) des aspects structurels du générateur d'éolienne (WTG) en fonction des images capturées (22), dans lequel le positionnement (2300) est réalisé en fonction d'une zone d'intérêt (ROI) sur le générateur d'éolienne (WTG) identifié dans une image capturée (22), dans lequel la zone d'intérêt (ROI) est une partie fixe du générateur d'éolienne (WTG, 30), et **caractérisé en ce que**
l'acte de déclenchement (210) est réalisé à l'aide de l'analyse d'images en direct pour la détection des changements de luminosité.

2. Procédé de diagnostic visuel (1000) selon la revendication 1, dans lequel la partie fixe du du générateur d'éolienne (WTG, 30) est une tour (46) ou une nacelle (48).

3. Procédé de diagnostic visuel (1000) selon la revendication 1 ou 2, dans lequel l'acte de stabilisation (2220) est réalisé en fonction d'une région d'intérêt (ROI) sur le générateur d'éolienne (WTG) identifiée dans une image capturée (22).

4. Procédé de diagnostic visuel (1000) selon l'une ou plusieurs des revendications 1 à 3, dans lequel le procédé (1000) est réalisé en positionnant (23 00) le véhicule aérien sans pilote (UAV) le long d'une trajectoire de vol (86) par rapport au générateur d'éolienne (WTG) et dans lequel l'acte de déclenchement (210) est réalisé en fonction de la distance entre le véhicule aérien sans pilote (UAV) et la pièce mobile (34).

5. Procédé de diagnostic visuel (1000) selon l'une ou plusieurs des revendications 1 à 4, dans lequel il y a également un acte d'établissement (700) de la position relative (82) ou de la distance (84) entre le véhicule aérien sans pilote (UAV) et le générateur d'éolienne (WTG) .

6. Procédé de diagnostic visuel (1000) selon l'une ou plusieurs des revendications 1 à 5, dans lequel les actes :
- de positionnement (23 00) et/ou de stabilisation (2220) sont réalisés en fonction de la position relative (82) ou de la distance (84) de sorte que la position relative (82) ou la distance (84) sont sensiblement stables ; et
- de déclenchement (210) est réalisé en fonction de la position relative (82) ou de la distance (84) lorsque la position relative (82) ou la distance (80) change.

7. Procédé de diagnostic visuel (1000) selon l'une ou plusieurs des revendications 1 à 6, dans lequel les images capturées (22) sont horodatées avec une horloge synchronisée avec une horloge de fonctionnement d'une éolienne.

8. Procédé de diagnostic visuel (1000) selon l'une ou plusieurs des revendications 1 à 7, dans lequel il y a un ou plusieurs actes répétitifs :
- de positionnement (2300) de véhicule aérien sans pilote (UAV) sensiblement dans le plan du rotor (32) du générateur d'éolienne (WTG) ;
- de pointage (100) de la ligne de visée (14) sensiblement vers le moyeu (48) ou la nacelle (49) ; et
- de déclenchement (210) de capture (200) en fonction de la pièce mobile (34) du générateur d'éolienne (WTG, 30).

9. Procédé selon la revendication 8, comprenant également les actes :
- de sélection (300) d'au moins une image de référence (20) parmi les images capturées (22) ou provenant d'ailleurs ;
- de comparaison (500) de l'au moins une autre image capturée (22) avec l'au moins une image de référence (20) ; et
- de diagnostic (600) des aspects structurels du générateur d'éolienne (WTG) en fonction du résultat de l'acte de comparaison (500), dans lequel l'acte de comparaison (500) comprend un acte de détermination (610) d'un écart entre les pales du rotor (50), dans lequel l'acte de diagnostic (600) implique l'application d'un ensemble de métriques de pale (52) à l'image de référence (20), et dans lequel l'acte de comparaison (500) est réalisé par les métriques de pale (52) appliquées à l'image de référence (20) comparées aux métriques de pale (52) d'au moins une image capturée (22).

10. Procédé de diagnostic visuel (1000) selon l'une ou plusieurs des revendications 1 à 7, dans lequel les actes sont réalisés de manière répétitive, comme requis, avec un ou plusieurs actes répétitifs :
- de positionnement (2300) du véhicule aérien sans pilote (UAV) sensiblement dans le plan de rotation (32) du générateur d'éolienne (WTG) ;
- de pointage (100) de la ligne de visée (14) sensiblement vers le moyeu (49) ou la nacelle (48) ;
- de déclenchement (210) de capture (200) dans un angle d'azimut de rotation ;
- de positionnement répétitif (2300) le long d'un chemin d'inspection (88) sensiblement vertical tout en déclenchant (210) la capture (200) en fonction de la pale du rotor (50) sensiblement dans le même angle d'azimut de rotation.

11. Procédé de diagnostic visuel (1000) selon l'une ou plusieurs des revendications 1 à 7, dans lequel les actes sont réalisés de manière répétitive, comme requis, avec un ou plusieurs actes répétitifs :
- de positionnement (2300) du véhicule aérien sans pilote (UAV) hors du plan de rotation (32) ;
- de pointage (100) de la ligne de visée (14) sensiblement dans un plan perpendiculaire au plan de rotation (32) ;
- de positionnement répétitif (2300) le long d'un chemin d'inspection (88) sensiblement le long d'un radial (60) du plan du rotor (53) de l'appareil d'éolienne (WTG).

12. Procédé de diagnostic visuel (1000) selon la revendication 10 ou 11, comprenant également des actes
- de sélection (300) d'au moins une image de référence (20) parmi les images capturées (22) ou provenant d'ailleurs ;
- de comparaison (500) de l'au moins une autre image capturée (22) avec l'au moins une image de référence (20) ; et
- de diagnostic (600) des aspects structurels du générateur d'éolienne (WTG) en fonction du résultat de l'acte de comparaison (500).

13. Procédé de diagnostic visuel (1000) selon l'une quelconque ou plusieurs des revendications 1 à 12, dans lequel le procédé est réalisé (3000) est d'une éolienne offshore (30) et le véhicule aérien sans pilote (UAV) est piloté depuis un navire (1) doté d'une plateforme adaptative (91) avec un héliport (98) configuré pour accueillir un véhicule aérien sans pilote (UAV) ; le procédé (1000) comprenant au moins les autres actes :
- d'atterrissage (3200) du véhicule aérien sans pilote (UAV) sur l'héliport (98) tout en ajustant (2200) l'héliport (98) de la plateforme adaptative (40).

14. Procédé de diagnostic visuel (1000) selon l'une quelconque ou plusieurs des revendications 1 à 13, dans lequel l'acte de déclenchement (210) est réalisé en fonction des conditions de luminosité sur une région d'intérêt (ROI) spécifiée.

15. Procédé de diagnostic visuel (1000) selon la revendication 14, dans lequel une pale traverse la région d'intérêt spécifique (ROI).

16. Procédé de diagnostic visuel (1000) selon la revendication 15, dans lequel l'acte de déclenchement est réalisé en fonction d'une valeur moyenne de la luminosité dans la ROI spécifique.
